# EUROPEAN PATENT SPECIFICATION

(11) **EP 2 077 255 B1**
(45) Date of publication and mention of the grant of the patent: **21.03.2012**
(21) Application number: 07829445.1
(22) Date of filing: 09.10.2007
(51) Int. Cl.: C03B 17/06

(54) **GLASS RIBBON PRODUCING APPARATUS AND PROCESS FOR PRODUCING THE SAME**
VORRICHTUNG UND VERFAHREN ZUR HERSTELLUNG EINES GLASBANDS
APPAREIL DE PRODUCTION D'UN RUBAN DE VERRE ET PROCÉDÉ DE PRODUCTION ASSOCIÉ

(30) Priority: 24.10.2006 JP 2006289112
(43) Date of publication of application: 08.07.2009
(73) Proprietor: Nippon Electric Glass Co., Ltd., Otsu-shi Shiga 520-8639 (JP)
(72) Inventor: TOMAMOTO, Masahiro, Otsu-shi Shiga 520-8639 (JP); ODA, Hidetaka, Otsu-shi Shiga 520-8639 (JP)
(74) Representative: Tetzner, Michael
(86) International application number: PCT/JP2007/069707
(87) International publication number: WO 2008/050606

(56) References cited:
- EP-A- 1 721 872
- EP-A- 2 043 958
- JP-A- 05 124 826
- JP-A- 10 167 740
- JP-A- 10 291 826
- JP-A- 10 291 827
- JP-A- 2001 031 435
- US-A- 1 785 497
- US-A1- 2006 042 314

## Description

The present invention relates to a glass ribbon producing apparatus and a process for producing the same, in particular, an improvement in a technique for producing a glass ribbon by what is called a down-draw process in which molten glass is caused to flow downward from a forming member to form the glass ribbon.

As has been well known, when a sheet glass is produced, there has been known what is called a down-draw process in which molten glass is caused to flow downward from a forming member to form a glass ribbon serving as a raw glass sheet. Examples of a process representing the down-draw process include an overflow down-draw process (fusion process) and a slot down-draw process. The former overflow down-draw process is a process in which, by causing molten glass continuously fed to a forming member having a wedge-like cross-sectional configuration to flow downward from a top portion of the forming member along both side surfaces thereof, the molten glass is fused at a lower end portion of the forming member to be formed into a configuration of a single sheet, and a sheet-like glass ribbon having the configuration is caused to flow downward from the lower end portion of the forming member to finally form a solidified glass ribbon. On the other hand, the latter slot down-drawprocess is a process inwhichmolten glass continuously fed to a forming member is caused to flow downward from a slit in the shape of a oblong hole formed at a lower end portion of the forming member to be formed into a sheet-like configuration, a glass ribbon having the sheet-like configuration is caused to flow downward along a transport direction, and then a solidified glass ribbon is finally formed. By separating the glass ribbon formed by those processes into a predetermined size, the sheet glass is obtained from the glass ribbon.

In recent years, in the down-draw process of this type, various measures have been taken in order to form glass ribbons having high quality and high grade. For example, JP 02-225326 A discloses that shielding plates made of metal or fireproof material are provided on both sides of front and back surfaces of at least a widthwise middle portion of a glass ribbon caused to flow downward from a forming member in parallel with and adjacent to the glass ribbon in order to protect the glass ribbon from an air convection occurring in a furnace for forming the glass ribbon.

In JP 05-124827 A it is proposed to take measures shown below in order to prevent a widthwise contraction of a glass ribbon immediately after being caused to flow downward from a forming member. That is, it is disclosed that the widthwise contraction of the glass ribbon is controlled by pulling out the glass ribbon caused to flow downward from the forming member downward using a pull roller and cooling both widthwise end portions of the glass ribbon at a position immediately below the forming member using a cooler disposed in spaced-apart relation from the glass ribbon. As a specific example of the cooler, it is disclosed that the cooler is constructed by disposing the total of four sheet-like members, in which refrigerants are circulated, in twos each provided on the right side and the left side so as to sandwich the both widthwise end portions of the glass ribbon. Note that, by disposing the cooler in spaced-apart relation from the glass ribbon, a sufficiently low temperature at which the cooler is not thermally deformed is maintained.

In recent years, in a glass substrate for flat panel displays represented by a display for liquid crystal and various sheet glasses used in a cover glass or the like for a solid-state imaging device such as a CCD or a CMOS, a reduction in sheet thickness is required, and it is a reality that, with this trend, the reduction in sheet thickness is also required for the glass ribbon formed by the down-draw process. In the down-draw process of this type, by taking various measures such as a decrease in the quantity of flow of the molten glass flowing downward from the forming member and an increase in a flow speed of the glass ribbon, the requirement for the reduction in the sheet thickness of the glass ribbon described above has been met.

However, as the sheet thickness of the glass ribbon is smaller, the glass ribbon caused to flow downward from the forming member is more liable to swing or the like on its transport route, which makes it difficult to maintain its predetermined attitude. When the attitude of the glass ribbon caused to flow downward is disturbed, an inappropriate deformation occurs to the finally formed glass ribbon, which may lead to a critical problem that the glass ribbon cannot be put into practical use as a glass ribbon. In particular, when the sheet thickness of the glass ribbon is 0.5 mm or less, the disturbance in the attitude of the glass ribbon and the deformation due to the attitude disturbance occur more apparently.

Consequently, in forming a glass ribbon as a thin sheet, it is important to control the disturbance in the attitude of the glass ribbon described above without impairing the surface grade of the glass ribbon to be formed. However, it is a reality that no measure has been taken from this viewpoint. That is, as disclosed in JP 02-225326 A described above, in a case where the shielding plates are disposed so as to cover at least the widthwise middle portion of the glass ribbon, when the disturbance in the attitude of the glass ribbon occurs, the widthwise middle portion of the glass ribbon comes into contact with the shielding plates, and hence a flaw may occur to or foreign substance may adhere to the front or back surface of the widthwise middle portion of the glass ribbon. In general, in the glass ribbon formed by the down-draw process, it is customary to remove both widthwise end portions as ear portions, and obtain the sheet glass as a product from the widthwise middle portion. In particular, in a case where the overflow down-draw process is adopted, the sheet glass is used without polishing the front and back surfaces thereof. Consequently, when the flaw occurs to or the foreign substance adheres to the widthwise middle portion as described above, the product value of the obtained sheet glass may be degraded and, further, a critical problem may be encountered that the sheet glass cannot be practically used as a product.

Further, JP 05-124827 A described above discloses that the sheet-like cooler is disposed in spaced-apart relation from the glass ribbon at the both widthwise end portions of the glass ribbon. The spaced distance between the glass ribbon and the cooler is a distance capable of maintaining a sufficiently low temperature at which the cooler is not thermally deformed, and hence the glass ribbon caused to flow downward does not come into contact with the cooler. Therefore, the disturbance in the attitude of the glass ribbon is not controlled by the cooler. In addition, as disclosed in the document, it can be conceived that, by holding the glass ribbon between a plurality of rollers (pull rollers) disposed at intervals along the transport direction, the disturbance in the attitude of the glass ribbon is controlled. However, in this case, the rollers hold the glass ribbon therebetween, and hence a critical problem may be encountered that damage such as a flaw, a crack, or the like caused by the rollers occurs to the glass ribbon. Moreover, the rollers holding the glass ribbon therebetween are in contact with the widthwise middle portion of the glass ribbon, and hence a problem similar to that in Patent Document 1 described above may occur.

EP-A 2 043 958 discloses an apparatus and a process for producing a sheet-like glass ribbon comprising an edge-guiding assembly with rollers either in close proximity or in contact with the glass ribbon thereby providing a gap with a dimension larger than the sheet thickness.

EP-A 1 721 872 discloses an overflow downdraw fusion process comprising edge rolls for supporting and guiding the glass ribbon which are positioned below pulling rolls. Said pulling rolls contact and cool the glass ribbon at its edge portions.

US-A 1 785 497 discloses an overflow downdraw fusion process comprising a guiding portion for guiding the lateral portions of the glass ribbon.

In view of the foregoing circumstances, a technical object of the present invention is to accurately control, even when the glass ribbon as a thin sheet is formed by the down-draw process, the disturbance in the attitude of the glass ribbon occurring at the time of the forming without impairing the surface grade of the widthwise middle portion of the glass ribbon caused to flow downward from the forming member.

According to the present invention, as an apparatus invented in order to achieve the above-mentioned object, there is provided a glass ribbon producing apparatus which feeds molten glass to a forming member and causes the molten glass to flow downward from the forming member to form a sheet-like glass ribbon, including a guiding portion which is disposed on a transport route for the glass ribbon caused to flow downward, and has a gap with a dimension larger than a sheet thickness of each of both widthwise end portions of the glass ribbon in a thickness direction of the glass ribbon, for guiding only the both widthwise end portions of the glass ribbon within a range of the gap, the guiding portion including guide rollers, characterized in that the guide rollers rotate with a speed in synchronization with a flow speed of the glass ribbon in a state in which the guide rollers are disposed in opposing relation at each of the both widthwise end portions of the glass ribbon via the gap with the dimension larger than the sheet thickness of the glass ribbon.

In accordance with the producing apparatus as described above, the glass ribbon is caused to smoothly flow downward through the gap while the both widthwise end portions thereof is guided within the range of the gap of the guiding portion, and hence it becomes possible to reliably control the disturbance in the attitude of the glass ribbon caused to flow downward within the range of the gap. In addition, only the both widthwise end portions of the glass ribbon are guided by the guiding portion, and hence a non-contact state is maintained at the widthwise middle portion of the glass ribbon while the glass ribbon is being guided by the guiding portion. Accordingly, the guiding portion does not cause a flaw to occur to or foreign substance to adhere to the widthwise middle portion of the glass ribbon, and it also becomes possible to ensure an excellent surface grade of the widthwise middle portion of the glass ribbon from which the sheet glass is obtained.

With the obove arrangement, the guide rollers are rotating at the rotation speed in synchronization with the flow speed of the glass ribbon, even when the guide rollers guide the glass ribbon in actual contact with the both widthwise end portions of the glass ribbon, and hence the glass ribbon can be smoothly guided downward. As a result, such a situation can be properly prevented that damage such as a flaw or the like occurs to the both widthwise end portions of the glass ribbon guided by the guide rollers.

A warp or a displacement, which may occur to the glass ribbon caused to flow downward, is controlled within the range of the gap of the guiding portion, and hence such a situation can be prevented that the glass ribbon is solidified in a state where the glass ribbon is affected by inappropriately large displacement or warp. As a result, it becomes possible to produce a glass ribbon excellent in flatness that has substantially no warp.

In the producing apparatus described above, the guiding portion is preferably disposed below cooling portion for cooling the both widthwise end portions of the glass ribbon.

With this arrangement, the attitude disturbance in the lower portion of the glass ribbon is controlled, and hence such a situation is prevented that the upper portion of the glass ribbon is deformed due to the influence of the attitude disturbance in the lower portion, and it becomes possible to more reliably control the disturbance in the attitude of the entire glass ribbon as the result.

According to the present invention, as a process invented in order to achieve the above-mentioned object, there is provided a process for producing a glass ribbon by feeding molten glass to a forming member and causing the molten glass to flow downward from the forming member to form a sheet-like glass ribbon, including a guiding step of causing only both widthwise end portions of the glass ribbon caused to flow downward to pass through a gap provided in a guiding portion so as to have a dimension larger than a sheet thickness of each of the both widthwise end portions, and guiding the glass ribbon within a range of the gap, wherein, as the guiding portion, guide rollers are used, characterized in that the guide rollers rotate with a speed in synchronization with a flow speed of the glass ribbon in a state in which the guide rollers are disposed in opposing relation at each of the both widthwise end portions of the glass ribbon via the gap with the dimension larger than the sheet thickness of the glass ribbon.

In accordance with the producing process as described above, an operation/working-effect similar to that described in connection with the above mentioned glass ribbon producing apparatus can be obtained.

In the producing process described above, a displacement or a warp of the glass ribbon is preferably controlled within the range of the gap of the guiding portion in the guiding step.

In accordance with the producing process as described above, an operation/working-effect similar to that described in connection with the above mentioned glass ribbon producing apparatus can be obtained.

In the producing process described above, the guiding step is performed after a cooling step of cooling the both widthwise end portions of the glass ribbon is performed.

In accordance with the producing process as described above, an operation/working-effect similar to that described in connection with the above mentioned glass ribbon producing apparatus can be obtained.

In the producing process described above, the sheet thickness of the widthwise middle portion of the glass ribbon after the forming is preferably 0.5 mm or less, and further preferably 0.2 mm or less. The wording "the glass ribbon after the forming" means a glass ribbon in a state where the glass ribbon is sufficiently cooled and solidified to a degree that the thickness thereof is not reduced any more even when the glass ribbon is pulled downward.

That is, in accordance with the producing process according to the present invention, it is possible to properly produce an extremely thin sheet glass that is recently requested in a cover glass for a solid-state imaging device such as a CCD or a CMOS, and a glass substrate for a liquid crystal display.

According to the present invention as described above, even when the glass ribbon caused to flow downward is a thin sheet, the glass ribbon is caused to smoothly flow downward through the gap while the both widthwise end portions thereof are guided within the range of the gap of the guiding portion. Consequently, as described above, by guiding the both widthwise end portions of the glass ribbon, it becomes possible to reliably control the disturbance in the attitude of the glass ribbon within the range of the gap, and accurately prevent the deformation of the glass ribbon that occurs due to the disturbance in the attitude of the glass ribbon. In addition, the guiding portion guides only the both widthwise end portions of the glass ribbon, and hence the widthwise middle portion of the glass ribbon is maintained in a non-contact state. As a result, the guiding portion does not cause a flaw to occur to or foreign substance does not adhere to the widthwise middle portion of the glass ribbon. Consequently, it becomes possible to accurately control the disturbance in the attitude of the glass ribbon caused to flow downward or the deformation of the glass ribbon resulting from the disturbance in the attitude while maintaining the excellent surface grade of the widthwise middle portion of the glass ribbon from which the sheet glass is obtained. In other words, it becomes possible to produce a glass ribbon as a thin sheet superior in flatness and excellent in the surface grade of the widthwise middle portion.

In the drawings:
FIG. 1 is a schematic longitudinal side view showing a glass ribbon producing apparatus according to an embodiment of the present invention; and
FIG. 2 is a schematic longitudinal front view showing the producing apparatus.

An embodiment of the present invention is described hereinbelow with reference to the accompanying drawings.

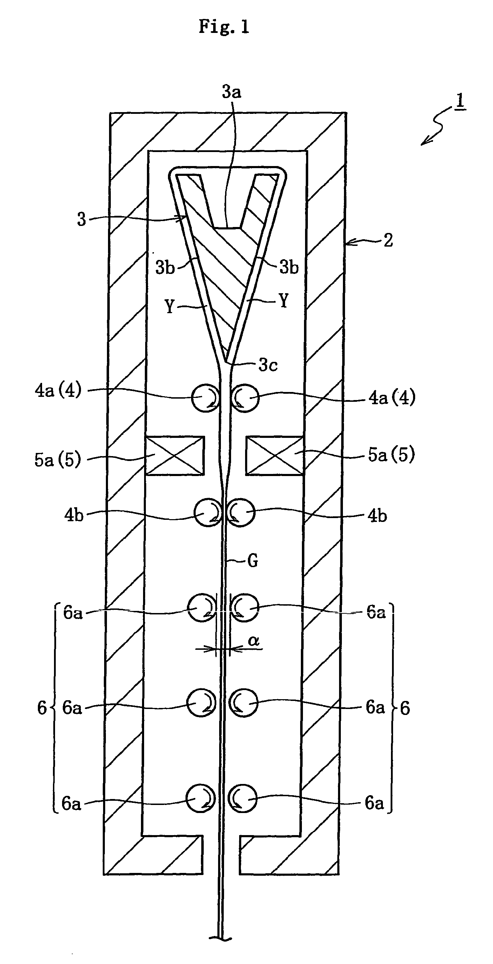

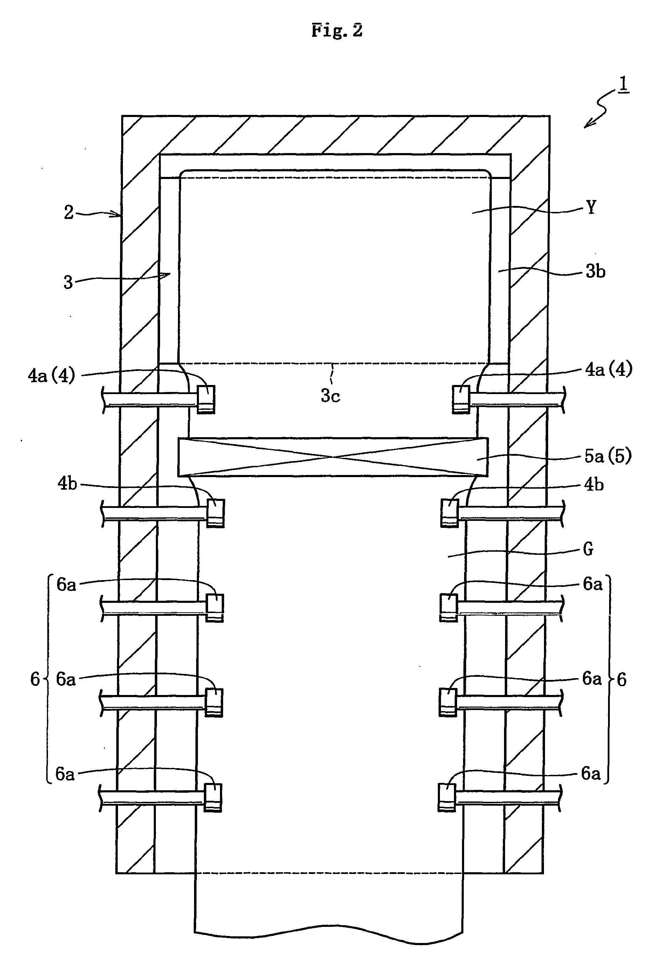

FIG. 1 is a schematic longitudinal side view schematically showing an internal state of a glass ribbon producing apparatus according to one embodiment of the present invention, while FIG. 2 is a schematic longitudinal front view schematically showing the internal state of the producing apparatus. As shown in the respective drawings, this producing apparatus 1 includes a forming member 3, cooling portion 4, reheating portion 5, and guiding portion 6 in order from above inside a furnace 2 made of refractory brick.

The forming member 3, which has a wedge-like cross-sectional configuration, and an overflow trough 3a at a top portion thereof, is adapted to cause molten glass Y fed to the overflow trough 3a to overflow from the top portion and cause the overflowing molten glass Y to flow downward along both side surfaces 3b of the forming member 3 so that the molten glass Y is fused at a lower end portion 3c of the forming member 3 to be made into a sheet-like configuration, and the molten glass Y in this configuration is caused to flow downward as a sheet-like glass ribbon G along a vertical direction.

The cooling portion 4 controls a widthwise thermal contraction of the glass ribbon G at a position immediately below the forming member 3, and is constructed of cooling rollers (edge rollers) 4a that are disposed so as to hold therebetween the glass ribbon G immediately after the molten glass Y caused to flow downward from the top portion of the forming member 3 along the both side surfaces 3b is fused at the lower end portion 3c of the forming member 3 to be formed into the configuration of a single sheet. In greater detail, the total of four cooling rollers 4a are provided in two pairs each disposed at each widthwise end portion of the glass ribbon G, and adapted to rotate at a rotation speed in synchronization with the flow speed of the glass ribbon G, while holding therebetween only the both widthwise end portions of the glass ribbon G.

The reheating portion 5 reheats and softens the glass ribbon G which is temporarily cooled while being caused to flow downward from the forming member 3, and is constructed of heaters 5a disposed in opposing relation at each of front and back surfaces of the glass ribbon G via space. In greater detail, as shown in FIG. 2, each of the heaters 5a is longer than the widthwise dimension of the glass ribbon G, and is adapted to reheat and soften the glass ribbon G over the entire width of the glass ribbon G. Although depiction is omitted, there is adopted a structure in which each of the heaters 5a is divided into a plurality of units along the width direction of the glass ribbon G, and the heating temperature can be individually controlled in the width direction such that the softened state of the glass ribbon G becomes substantially equal in the width direction. Note that, in this embodiment, similarly to the above-mentioned cooling rollers 4a disposed immediately below the forming member 3, cooling rollers 4b as cooling portion for controlling the widthwise thermal contraction of the glass ribbon G reheated by the heaters 5a are also disposed immediately below the heaters 5a. The cooling rollers 4b have a structure similar to that of the cooling rollers 4a described above, and are adapted to rotate while holding therebetween the both widthwise end portions of the reheated glass ribbon G.

The guiding portion 6 has a gap with a dimension larger than the sheet thickness of each of the both widthwise end portions of the glass ribbon in a thickness direction of the glass ribbon, and guides only the both widthwise end portions of the glass ribbon while controling the warp or the displacement of the glass ribbon within the range of the gap. In greater detail, the guiding portion 6 is constructed of guide rollers 6a which rotate in a state in which the guide rollers 6a are disposed in opposing relation at each of the both widthwise end portions of the glass ribbon G via a gap with a dimension larger than the sheet thickness of each of the both widthwise end portions of the glass ribbon G. An opposing interval α between the guide rollers 6a opposing to each other in the thickness direction of the glass ribbon G is preferably set to 10 mm or less, especially 5 mm or less. Note that the lower limit value of the opposing interval α is appropriately adjusted depending on the sheet thickness of each of the both widthwise end portions of the glass ribbon G and the like, and is preferably, for example, 0.2 mm or more, especially 1 mm or more. The guide rollers 6a, which are four in total and provided in two pairs each disposed at each of the widthwise end portions of the glass ribbon G, are disposed at one or a plurality of locations on a transport route (three locations in a vertical direction in the drawing) when viewed in a direction of transporting the glass ribbon G. Each of the guide rollers 6a is adapted to rotate at a rotation speed in response to the flow speed of the glass ribbon G. When the guide rollers 6a are disposed at the plurality of locations in the direction of transporting the glass ribbon G, the lowermost guide rollers 6a may be used as pull rollers for pulling out the glass ribbon G downward while holding therebetween the glass ribbon G by narrowing the opposing interval α thereof as needed.

According to the producing apparatus 1 having the structure thus described, the glass ribbon G is produced in a manner as follows.

First, the glass ribbon G immediately after being caused to flow downward from the lower end portion 3c of the forming member 3 is extended downward while the widthwise contraction thereof is controlled by the cooling rollers 4a, and the thickness thereof is reduced to a certain thickness (hereinafter, referred to as initial thickness). That is, the glass ribbon G is cooled by the cooling rollers 4a and the atmosphere in the furnace 2 to be brought close to a solidified state, and a substantial change in the sheet thickness does not occur any more in a stage in which the glass ribbon G reaches the initial thickness described above. Subsequently, the glass ribbon G, which has been temporarily cooled and has reached the initial thickness, is softened by the reheating of the heaters 5a. Thus, by reheating the glass ribbon G, the glass ribbon G that has been temporarily cooled is re-extended downward, and the sheet thickness of the glass ribbon G is made smaller than the initial thickness described above. Specifically, the sheet thickness of the widthwise middle portion of the glass ribbon G that is reheated by the heaters 5a is finally reduced to, e.g., 1/2 or less of the initial thickness of the widthwise middle portion.

With this arrangement, the sheet thickness of the glass ribbon is reduced in stages at a position immediately below the forming member 3 and at a position immediately below the heaters 5a, and hence the reduction in the sheet thickness of the glass ribbon G can be properly achieved without inappropriately increasing the flow speed of the glass ribbon G. The reheating by the heaters 5a is performed over the entire width of the glass ribbon G at a temperature not less than the softening point of the glass ribbon G (e.g., 1,000 to 1,300°C), and the adjustment of the heating temperature is performed in the width direction such that the softened state of the glass ribbon G becomes uniform in the width direction. Accordingly, because the reheating by the heaters 5a reduces the possibility of occurrence of variations in the displacement amount in the direction of transporting the glass ribbon G, it becomes possible to accurately perform the reduction in the sheet thickness of the glass ribbon G.

In addition, by thus reheating the glass ribbon G, the glass ribbon G with the sheet thickness of 0.5 mm or less and, further, the glass ribbon G with the sheet thickness of 0.2 mm or less can be easily produced. Such a glass ribbon G with an extremely thin sheet thickness can be suitably used as a cover glass for a solid-state imaging device such as a CCD or a CMOS, and a glass substrate for various flat panel displays represented by a liquid crystal display.

Moreover, the glass ribbon G with the sheet thickness reduced by the reheating of the heaters 5a is guided downward between the guide rollers 6a disposed in opposing relation via the gap with a dimension larger than the sheet thickness of each of the both widthwise end portions of the glass ribbon G. In general, as the sheet thickness of the glass ribbon G is smaller, the glass ribbon G caused to flow downward from the lower end portion 3c of the forming member 3 is more liable to swing and be displaced from a predetermined attitude on its transport route. However, with the lower portion of the cooled glass ribbon G passing through the gap of the guide rollers 6a, it follows that the glass ribbon G is guided while the displacement thereof is controlled within the range of the gap. As a result, such a situation is prevented that a part of the glass ribbon G in the softened state immediately below the forming member 3, immediately below the heaters 5a, or the like is solidified in a state where the part of the glass ribbon G is deformed by the influence of the displacement, and hence the warp of the glass ribbon G is also controlled within the range of the gap of the guide rollers 6a. Consequently, it becomes possible to produce the glass ribbon G as a thin sheet excellent in flatness. Note that each of the guide rollers 6a rotates at the rotation speed in synchronization with the flow speed of the glass ribbon G, and accordingly, even when the glass ribbon G is guided in actual contact with the guide rollers 6a, the glass ribbon G is smoothly guided downward, whereby it is possible to accurately reduce the probability of occurrence of damage such as a flaw or the like to the both widthwise end portions of the glass ribbon G.

The cooling rollers 4a and 4b, and the guide rollers 6a come into contact with only the both widthwise end portions of the glass ribbon G, and do not come into contact with the widthwise middle portion on the transport route for the glass ribbon G caused to flow downward from the lower end portion 3c of the forming member 3, and hence it follows that high surface grade can be maintained in the widthwise middle portion of the glass ribbon G. When a sheet glass is obtained from the finally solidified glass ribbon G, because it is customary to remove the both widthwise end portions of the glass ribbon G as ear portions, and obtain the sheet glass from the widthwise middle portion, a sheet glass as a thin sheet having high surface grade (e.g., a sheet glass with the sheet thickness of 0.5 mm or less) can be produced. By disposing, as the cooling portion, the cooling rollers 4a and 4b immediately below the forming member 3 and immediately below the heaters 5a, the contraction of the widthwise dimension of the glass ribbon G can be controlled. Consequently, the reduction in the sheet thickness of the glass ribbon G can be achieved while a large widthwise dimension of the widthwise middle portion of the glass ribbon G from which the sheet glass is obtained is secured.

Note that the present invention is not limited to the embodiment described above, and various modifications can be made. For example, in the embodiment described above, the structure in which the reheating portion is disposed at one location on the transport route for the glass ribbon has been described. However, a plurality of the reheating portion may be disposed as needed at intervals in a vertical direction on the transport route for the glass ribbon extending from the cooling portion disposed immediately below the forming member to the guiding portion.

In addition, in the embodiment described above, the technique for reducing the sheet thickness of the glass ribbon using the reheating portion has been described. However, when the sheet thickness of the glass ribbon can be sufficiently reduced by, e.g., decreasing the quantity of flow of the molten glass caused to flow downward from the forming member, or increasing the flow speed of the molten glass, the reheating portion may not be adopted.

Moreover, in the embodiment described above, the guiding portion constructed of the guide rollers has been described. However, for example, in the guiding portion, the portion for guiding the both widthwise end portions of the glass ribbon may be constructed of a sheet-like member elongated in a direction of transporting the glass ribbon.

In addition, in the embodiment described above, the present invention has been applied to the glass ribbon formed by the overflow down-draw process. However, other than the overflow down-draw process, the present invention can be similarly applied to the glass ribbon formed by, e.g., the slot down-draw process.

## Claims

1. A glass ribbon producing apparatus (1) which feeds molten glass (Y) to a forming member (3) and causes the molten glass (Y) to flow downward from the forming member (3) to form a sheet-like glass ribbon (G), the glass ribbon producing apparatus (1) comprising a guiding portion (6) which is disposed on a transport route for the glass ribbon (G) caused to flow downward, and has a gap with a dimension larger than a sheet thickness of each of both widthwise end portions of the glass ribbon (G) in a thickness direction of the glass ribbon (G), for guiding only the both widthwise end portions of the glass ribbon (G) within a range of the gap, the guiding portion (6) including guide rollers (6a), **characterized in that** the guide rollers (6a) rotate with a speed in synchronization with a flow speed of the glass ribbon (G) in a state in which the guide rollers (6a) are disposed in opposing relation at each of the both widthwise end portions of the glass ribbon (G) via the gap with the dimension larger than the sheet thickness of the glass ribbon.

2. A glass ribbon producing apparatus according to claim 1, wherein the guiding portion (6) is disposed below a cooling portion (4) for cooling the both widthwise end portions of the glass ribbon (G).

3. A glass ribbon producing apparatus according to claim 1 or 2, further comprising a furnace (2) which includes the forming member (3) and the guiding portion (6) therein.

4. A process for producing a glass ribbon by feeding molten glass (Y) to a forming member (3) and causing the molten glass (Y) to flow downward from the forming member (3) to form a sheet-like glass ribbon (G), comprising a guiding step of causing only both widthwise end portions of the glass ribbon (G) caused to flow downward to pass through a gap provided in a guiding portion (6) so as to have a dimension larger than a sheet thickness of each of the both widthwise end portions, and performing guiding within a range of the gap, wherein, as the guiding portion (6), guide rollers (6a) are used, **characterized in that** the guide rollers (6a) rotate with a speed in synchronization with a flow speed of the glass ribbon (G) in a state in which the guide rollers (6a) are disposed in opposing relation at each of the both widthwise end portions of the glass ribbon (G) via the gap with the dimension larger than the sheet thickness of the glass ribbon.

5. A process for producing a glass ribbon according to claim 4, wherein a displacement or a warp of the glass ribbon (G) is controlled within the range of the gap of the guiding portion (6) in the guiding step.

6. A process for producing a glass ribbon according to claim 4 or 5, wherein the guiding step is performed after a cooling step of cooling the both widthwise end portions of the glass ribbon (G) is performed.

7. A process for producing a glass ribbon according to any one of claims 4 to 6, wherein a sheet thickness of a widthwise middle portion of the glass ribbon (G) after forming is equal to or smaller than 0.5 mm.

## Patentansprüche

1. Vorrichtung (1) zur Herstellung eines Glasbands, welche geschmolzenes Glas (Y) in ein Formungselement (3) einspeist und das geschmolzene Glas (Y) veranlasst, vom Formungselement (3) nach unten zu fließen, um ein folienartiges Glasband (G) zu bilden, wobei die Vorrichtung (1) zur Herstellung eines Glasbands einen Führungsteilbereich (6) enthält, der an einer Transportroute für das Glasband (G), das veranlasst wurde, nach unten zu laufen, angeordnet ist und eine Lücke mit einer Abmessung größer als die Foliendicke eines jeden der beiden Endteilbereiche des Glasbands (G) in der Breite aufweist, zum Führen alleine der beiden Endteilbereiche des Glasbands (G) in der Breite innerhalb des Bereichs der Lücke, wobei der Führungsteilbereich (6) Führungsrollen (6a) enthält, **dadurch gekennzeichnet, dass** sich die Führungsrollen (6a) mit einer Geschwindigkeit in Synchronisation mit der Laufgeschwindigkeit des Glasbands (G) drehen, in einem Zustand, in dem die Führungsrollen (6a) in entgegen gesetzter Beziehung an jeder der beiden Endteilbereiche des Glasbands (G) in der Breite über die Lücke mit der Abmessung größer als die Foliendicke des Glasbands angeordnet sind.

2. Vorrichtung zur Herstellung eines Glasbands nach Anspruch 1, bei der der Führungsteilbereich (6) unter einen Kühlungsteilbereich (4) zum Kühlen der beiden Endteilbereiche des Glasbands (G) in der Breite.

3. Vorrichtung zur Herstellung eines Glasbands nach Anspruch 1 oder 2, ferner enthaltend einen Ofen (2), der darin das Formungselement (3) und den Führungsteilbereich (6) enthält.

4. Verfahren zur Herstellung eines Glasbands durch Einspeisen geschmolzenen Glases (Y) in ein Formungselement (3) und Veranlassen, dass das geschmolzene Glas (Y) vom Formungselement (3) nach unten fließt, um ein folienartiges Glasband (G) zu bilden, umfassend einen Führungsschritt des Veranlassens, dass alleine die beiden Endteilbereiche des Glasbands (G) in der Breite, das veranlasst wurde, nach unten zu laufen, durch eine in einem Führungsteilbereich (6) derart vorgesehene Lücke läuft, dass sie Abmessung größer als die Foliendicke eines jeden der beiden Endteilbereiche des Glasbands (G) in der Breite aufweist, und des Ausführens des Führens innerhalb des Bereichs der Lücke, wobei als Führungsteilbereich (6) Führungsrollen (6a) verwendet werden, **dadurch gekennzeichnet, dass** sich die Führungsrollen (6a) mit einer Geschwindigkeit in Synchronisation mit der Laufgeschwindigkeit des Glasbands (G) drehen, in einem Zustand, in dem die Führungsrollen (6a) in entgegen gesetzter Beziehung an jeder der beiden Endteilbereiche des Glasbands (G) in der Breite über die Lücke mit der Abmessung größer als die Foliendicke des Glasbands angeordnet sind.

5. Verfahren zur Herstellung eines Glasbands nach Anspruch 4, bei dem eine Versetzung oder eine Verwerfung des Glasbands (G) im Führungsschritt innerhalb des Bereichs der Lücke des Führungsteilbereichs (6) gesteuert wird.

6. Verfahren zur Herstellung eines Glasbands nach Anspruch 4 oder 5, bei dem der Führungsschritt nach einen Kühlungsschritt des Kühlens der beiden Endteilbereiche des Glasbands (G) in der Breite ausgeführt wird.

7. Verfahren zur Herstellung eines Glasbands nach einem der Ansprüche 4 bis 6, bei dem eine Foliendicke eines Mittelteilbereich des Glasbands (G) in der Breite nach Formung gleich oder kleiner ist als 0,5 mm.

## Revendications

1. Appareil de production d'un ruban de verre (1), qui conduit le verre fondu (Y) vers un élément de moulage (3) et provoque l'écoulement du verre fondu (Y) vers le bas, vers l'élément de moulage (3) pour former un ruban de verre de type feuille (G), l'appareil de production d'un ruban de verre (1) comprenant une partie de guidage (6), qui se trouve sur une voie de transport pour le ruban de verre (G) qui doit s'écouler vers le bas, et qui présente un intervalle d'une dimension supérieure à l'épaisseur d'une feuille, sur chacune des deux parties terminales latérales du ruban de verre (G) en direction de l'épaisseur du ruban de verre (G), pour guider seulement les deux parties terminales latérales du ruban de verre (G) dans une plage de l'intervalle, la partie de guidage (6) comprenant des rouleaux de guidage (6a), **caractérisés en ce que** les rouleaux de guidage (6a) tournent à une vitesse synchronisée à la vitesse d'écoulement du ruban de verre (G) dans un état dans lequel les rouleaux de guidage (6a) sont disposés selon une relation opposée à chacune des deux parties terminales latérales du ruban de verre (G) via l'intervalle de dimension supérieure à l'épaisseur de feuille du ruban de verre (G).

2. Appareil de production d'un ruban de verre (1) selon la revendication 1, où la partie de guidage (6) est disposée sous une partie de refroidissement (4) pour refroidir les deux parties terminales latérales du ruban de verre (G).

3. Appareil de production d'un ruban de verre (1) selon la revendication 1 ou 2, comprenant en outre, un four (2), qui comprend l'élément de moulage (3) et la partie de guidage (6).

4. Procédé de production d'un ruban de verre par alimentation de verre fondu (Y) dans un élément de moulage (3) et induction de l'écoulement du verre fondu (Y) vers le bas, vers l'élément de moulage (3) pour former un ruban de verre de type feuille (G), comprenant une étape de guidage pour ne faire s'écouler que les deux parties terminales latérales du ruban de verre (G) par passage sur un intervalle, se trouvant dans une partie de guidage (6), tel qu'il a une dimension supérieure à l'épaisseur d'une feuille, sur chacune des deux parties terminales latérales et effectuant le guidage dans une plage de l'intervalle, où comme partie de guidage (6), on utilise des rouleaux de guidage (6a), **caractérisé en ce que** les rouleaux de guidage (6a) tournent à une vitesse synchronisée à la vitesse d'écoulement du ruban de verre (G) dans un état dans lequel les rouleaux de guidage (6a) sont disposés selon une relation opposée à chacune des deux parties terminales latérales du ruban de verre (G) via l'intervalle de dimension supérieure à l'épaisseur de feuille du ruban de verre (G).

5. Procédé de production d'un ruban de verre selon la revendication 4, où un déplacement ou un gauchissement du ruban de verre (G) est contrôlé dans la plage de l'intervalle de la partie de guidage (6) dans l'étape de guidage.

6. Procédé de production d'un ruban de verre selon la revendication 4 ou 5, où l'étape de guidage est réalisée après une étape de refroidissement, pour refroidir les deux parties terminales latérales du ruban de verre (G).

7. Procédé de production d'un ruban de verre selon l'une quelconque des revendications 4 à 6, où l'épaisseur de feuille d'une partie centrale dans la largeur du ruban de verre (G) après moulage est égale ou inférieure à 0,5 mm.
